# EUROPEAN PATENT APPLICATION

(11) **EP 2 910 417 A2**
(43) Date of publication of application: **26.08.2015**
(21) Application number: 15154569.6
(22) Date of filing: 10.02.2015
(51) Int. Cl.: B60P 1/54

(54) **Trailer loading apparatus**

(30) Priority: 11.02.2014 GB 201402350
(71) Applicant: Purple Line Limited, Ipswich, Suffolk IP9 2BB (GB)
(72) Inventor: Harrison, Jonathan Mark, Ipswich, Suffolk IP9 2BB (GB); Barrow, Stuart Ross Boden, Ipswich, Suffolk IP9 2BB (GB); Fashe, Jeremiah Ileri, Ipswich, Suffolk IP9 2BB (GB); Rowley, Matthew John, Ipswich, Suffolk IP9 2BB (GB)
(74) Representative: Jackson, Nicholas Andrew

(57) **Abstract**

The trailer (10) is a trailer (10) for a folding camper wherein an accommodation space is arranged to be folded out of the trailer (10) at a final destination. The present invention provides a modular hoist (40) which is stored within a hoist storage compartment (50) mounted on the trailer (10). The modular hoist (40) can be mounted to and secured to the trailer (10) and it can then be used to raise and lower the auxiliary equipment to or from upper securement rails (20, 22). In use, a motorbike or other auxiliary equipment is initially secured within a transportation frame (60) on the ground adjacent to the trailer (10). This may comprise locating the wheels of the motorbike in or on a bogey (62) and then securing an upper frame (66) and straps (68) to a lower frame (61). Once secured, attachment means (49) located on the end of a flexible hoist member (48) can be secured to the upper frame (66). Once secured, the modular hoist (40) can then be operated to raise the auxiliary equipment and the transportation frame (60) to the required height. Once the transportation frame (60) has been raised and at the required height, the transportation frame (60) can then be pivoted relative to a mounting bracket (30) in a horizontal plane in order for the transportation frame (60) to locate above the securement rails (20, 22) on top of the trailer (10). The transportation frame (60) is then locked to the securement rails (20, 22). The auxiliary equipment is thereby easily mounted to the top of the trailer (10) and can be transported with the trailer (10). The hoist (40) is transported in a storage compartment (50) such that the hoist (40) can be subsequently used to dismount the auxiliary equipment at the destination.

## Description

### FIELD OF THE INVENTION

The present invention relates to trailer loading apparatus, a trailer including trailer loading apparatus and a method of loading a trailer. In particular, the present invention relates to trailer loading apparatus for a folding camper, a folding camper including trailer loading apparatus and a method of loading auxiliary equipment on to a folding camper.

### BACKGROUND

Trailers are arranged to be towed behind a motor vehicle in order to easily and safely transport loads. In particular, dedicated trailers may be used to provide specific apparatus and such a trailer may comprise a folding camper or trailer tent.

Towing trailers may be provided with a rigid lid on which auxiliary equipment or apparatus may be transported. In particular, a trailer may be provided with a rack on which bicycles, motorbikes, quad bikes, snow mobiles, jet skis, kayaks etc. may be transported. Such storage systems increase the amount of equipment that can be transported in a safe manner.

In order to retain and hold such auxiliary equipment on the top of a trailer, a rack or rail is generally provided on the top or lid of the trailer. This therefore requires the auxiliary equipment to be moved and lifted into position onto the rack or rail. Bicycles can be relatively easily manually lifted into position onto a trailer mounted rail. However, it is problematic to manually lift heavy equipment such as motorbikes, jet skis etc.

In order to mount the heavy and bulky auxiliary equipment, a ramp or ramps may be provided. The ramp may be positioned at the rear of the trailer and, thereby provides a sloping surface. A motorbike can then be manually pushed up the ramp in order to be retained on the trailer mounted rack. Similarly, a ramp may be provided in order to enable a jet ski to be pushed up and to then be secured to the top of the trailer.

Once transported to the final destination, the equipment can be removed from the trailer by again fixing the ramp to the rear of the trailer and pushing the equipment down the ramp. Accordingly, the ramp must be stored within the trailer or secured to the trailer in order for the ramp to be available at the destination. Accordingly, it is essential that the ramps are relatively short in order for the ramp to be easily transported. However, short ramp sections mean that the gradient of the ramp can be quite steep when attached to the rear of the trailer. This means that it can be difficult and/or dangerous to manually push heavy equipment up or down the ramp to or from the top of the trailer.

It is an aim of the present invention to overcome at least one problem associated with the prior art whether referred to herein or otherwise.

### SUMMARY OF THE INVENTION

According to a first aspect of the present invention there is provided a trailer comprising trailer loading apparatus and a hoist storage compartment, the trailer loading apparatus comprising a hoist and load securement means for securing auxiliary equipment on the trailer, the hoist comprising:
mounting means to mount a part of the hoist to the trailer; and
retaining means for releasably retaining a load to the hoist; and wherein the hoist is configurable between:
a first configuration in which the hoist is able to raise auxiliary equipment onto the load securement means provided on the top of the trailer; and
a second configuration in which the hoist is stored within the hoist storage compartment.

Preferably the hoist comprises a modular hoist.

Preferably the hoist comprises a winch. Preferably the hoist comprises an electric winch.

The hoist may comprise a manual hoist and may comprise a manual jack system.

Preferably the hoist is arranged to vertically lift the auxiliary equipment. The hoist may be arranged to initially solely lift or raise the auxiliary equipment (to a predetermined height) and the auxiliary equipment may then be arranged to be horizontally moved over the trailer prior to being solely vertically lowered down on to the top of the trailer.

Preferably the apparatus includes a first transportation frame. The trailer loading apparatus may comprise a plurality of transportation frames. The trailer loading apparatus may comprise a second transportation frame and may also comprise a third transportation frame.

Preferably the or each transportation frame is arranged to retain an item of auxiliary equipment thereon for transportation purposes.

The or each transportation frame may comprise a lower frame member (or lower frame assembly) or bogey on which a wheel or wheels of an item of auxiliary equipment may be retained.

The retaining means of the hoist may comprise an upper frame assembly which may be secureable to the transportation frame or a lower frame assembly of the transportation frame. The upper frame assembly may be arranged to be secured to the lower frame assembly by one or more straps.

The retaining means may comprise a spreader frame (upper frame assembly) together with associated straps in order to secure an item of auxiliary equipment to the transportation frame during loading and unloading.

The load securement means may comprise a securement rail and preferably comprises two securement rails.

The securement rails may be arranged to be parallel and spaced apart on the top of the trailer. The securement rails may extend laterally across the top of the trailer and may extend substantially from a first lateral side of the trailer to a second lateral side of the trailer. The or each securement rail may extend linearly across the top of the trailer. The or each securement rail may comprise an elongate member having a longitudinal length extending laterally across the top of trailer.

The or each securement rail may comprise locking means in order for a transportation frame to be secured at a number of pre-selected locations along a length of the securement rail. The locking means may comprise quick release pins and/or wire lock pins.

The or each transportation frame may be arranged to be movably secured to the or each securement rail. Preferably the or each transportation frame is arranged to be slidably secured to the or each securement rail and the or each transportation frame may be slidably moved along a length of the or each securement rail and locked in a transportation position. The or each transportation frame may be mounted on (ball) bearing mountings. The or each securement rail may comprise a plurality of ball bearing mountings defined on the upper surface thereof.

The transportation frame may comprise a first mounting member to register with a first securement rail and a second mounting member to register with a second securement rail. Preferably each mounting member is slidably engaged with a respective securement rail. Preferably each securement rail provides a plurality of ball bearing mountings on to which a respective mounting member can be supported such that the mounting member (and hence the transportation frame) can be slidably moved on the securement rails. Preferably the transportation frame is laterally moveable relative to the trailer on the load securement means.

Preferably the transportation frames are moveable along the securement rails of the trailer. Preferably the transportation frames are moveable along the lateral extent of the trailer within the or each securement rail. Preferably the transportation frame is lockable in one of a number of predefined positions along the or each securement rail.

Preferably the hoist includes a mast member.

Preferably the hoist includes a reach member.

Preferably the reach member may be selectively moveable or pivotable relative to the mast member.

The reach member may be lockable to the mast member at an angle in order to provide a hoist arrangement.

The mast member may be unlockable from the reach member in order for the mast member and the reach member to be stored in a substantially parallel or side-by-side configuration.

The reach member may be pivotally connected to the mast member. Preferably the reach member is pivotally moveable relative to the mast member between a storage position in which an elongate axis of the reach member is substantially parallel (or at 0 degrees) to an elongate axis of the mast member and a hoist position in which the elongate axis of the reach member extends at an operational angle to the elongate axis of the mast member. The operational angle may be in the range of 90 degrees to 170 degrees. Preferably the operational angle is in the range of 90 degrees and 135 degrees and more preferably in the range of 100 degrees and 130 degrees.

The hoist may comprise a flexible hoist member which may comprise a cord, rope or chain or a length of webbing or the like.

The length of the flexible hoist member may be fixed. One end of the flexible hoist member may be secured to an end of a reach member of the hoist and the other end of the flexible hoist member may be secured to the load retaining means.

The length of the flexible hoist member may be adjustable. One end (a proximal end) of the flexible hoist member may be secured to a winch spool of the hoist and the other end (a distal end) of the flexible hoist member may be secured to the load retaining means.

The flexible hoist member may comprise a section of webbing.

Preferably the hoist comprises releasable retaining means which is arranged to releasably retain the flexible hoist member to the retaining means which may be releasably connected to a transportation frame.

The mounting means may be located on a lateral side of the trailer. The mounting means may provide a mounting sleeve into which a part of the hoist can be inserted in order for the hoist to be mounted to the trailer. Preferably a mast member of the hoist comprises an end portion which is insertable into the mounting sleeve in order for the hoist to be mounted to the trailer.

Preferably, the mast member is arranged in use to be secured to the mounting means such that an elongate axis of the mast member extends vertically upwards.

The mounting means may comprise support means (or stabilising means) which may be engageable with a supporting surface surrounding the trailer. The mounting means may comprise a leg and foot which can be engaged with the ground. The mounting means may comprise a plurality of legs (and respective feet) for engaging with the ground. The support means (or stabilising means) may comprise an extendable leg for extending downwardly to engage with a supporting surface surrounding the trailer.

The mounting means may be permanently provided on an exposed outer surface of the trailer.

The mounting means may be configurable to be concealed, in particular, during transportation. The mounting means may be provided as a cabinet drawer which may be movable into and out of a part of the trailer body.

The mounting means may be provided on movement means to move the mounting means from a stored position within a storage compartment (preferably the hoist storage compartment) to a mounting position. The movement means may comprise sliding means and preferably comprise rails on which the mounting means can slide. The mounting means may comprise a mounting sleeve which may be located within a mounting frame. The mounting means may comprise a stabilising component comprising a leg and foot which is arranged to rest on the ground and to engage a lower end of the mast member.

The trailer may comprise a primary item of equipment which may comprise a folding camper or a trailer tent. The primary item of equipment may be arranged, during transportation, to be stored in a main stowing compartment of the trailer.

The hoist storage compartment may comprise a compartment defined within the trailer and may comprise an accessibility door defined in the trailer.

The hoist storage compartment may comprise a container which may be located or locatable at or towards a front end of the trailer. The hoist storage container may comprise a locker. The locker may be mounted at or towards a front end of the trailer. The locker may be mounted on an A-frame of the trailer.

The hoist storage compartment may comprise a hoist storage compartment door. Preferably the hoist storage compartment is accessible whilst a transportation frame is secured on the trailer.

Preferably the trailer comprises a hoist storage compartment door which provides access to the hoist storage compartment and a main access cover which provides access to a main stowing compartment. Preferably the main stowing compartment is separate from the hoist storage compartment.

The auxiliary equipment may comprise a bicycle, a motorbike, a quad bike, a wet bike, a jet ski, a snow mobile or a kayak.

According to a second aspect of the present invention there is provided trailer loading apparatus, the trailer loading apparatus comprising a hoist, the hoist comprising:
mounting means to mount a part of the hoist to a trailer; and
retaining means for releasably retaining a load to the hoist; and wherein the hoist is configurable between:
a first configuration in which the hoist is able to raise auxiliary equipment onto load securement means provided on a top of the trailer; and
a second configuration in which the hoist is stored within a hoist storage compartment.

According to a third aspect of the present invention there is provided a method of loading auxiliary equipment on to a trailer, the trailer comprising load securement means for securing auxiliary equipment on the trailer and a hoist storage compartment, the trailer loading apparatus comprising a hoist, the method comprising:
mounting a part of the hoist to the trailer; and
releasably retaining a load to the hoist; and reconfiguring the hoist between:
a first configuration in which the hoist is able to raise auxiliary equipment onto the load securement means provided on the top of the trailer; and
a second configuration in which the hoist is stored within the hoist storage compartment.

According to a further aspect of the present invention there is provided an apparatus for loading equipment from the ground to a trailer, the apparatus comprising:
a transportation frame for holding the equipment;
a hoist for moving the transportation frame; and
a securement means fitted to the top of the trailer, wherein
the transportation frame is releasably attachable to the transportation frame.

Preferably the securement means comprises spaced apart parallel rails laterally disposed on a top of the trailer. Preferably the transportation frame is attachable at discrete positions along the parallel rails. Preferably the parallel rails slideably engage the transportation frame. Preferably parallel rails comprise ball bearings to slideably engage the transportation frame. Preferably the transportation frame comprises ball bearings to slideably engage the parallel rails.

Preferably the transportation frame comprises: a lower frame to which the equipment is secured; an upper frame attached to the hoist; and straps attaching the lower frame to the upper frame. Preferably the lower frame comprises a channel for accepting the wheels of a vehicle. Preferably the apparatus further comprises a mount attached to the trailer and wherein the hoist is retained by the mount. Preferably the mount is fixedly attached to an external surface of the trailer. Preferably the mount is slideably attached to the trailer via a drawer movable between a stowing position inside of the trailer and an operating position outside of the trailer. Preferably the hoist is stowed in the drawer. Preferably the present invention comprises a trailer camper including an apparatus according to any one of the preceding statements.

According to another aspect of the present invention there is provided a method of loading equipment on to a trailer comprising:
attaching the equipment to a transportation frame located on the ground
using a hoist to raise the transportation frame and place it upon securement means attached to the top of the trailer; and
releasably attaching the transportation frame to the securement means.

Preferably the method comprises the further step of laterally displacing the transportation frame on the securement means to selectably position the transportation frame with respect to the trailer.

### BRIEF DESCRIPTION OF THE DRAWINGS

The present invention will now be described by way of example only, with reference to the drawings that follow, in which:
Figure 1 is a perspective view of a preferred embodiment of a trailer including trailer loading apparatus in which the hoist is located in the hoist storage compartment.
Figure 2 is a perspective view of a preferred embodiment of a trailer including trailer loading apparatus in which the hoist is mounted to the trailer.
Figure 3 is a perspective view of a preferred embodiment of a trailer including trailer loading apparatus in which a transportation frame is releasably secured to the hoist.
Figure 4 is a perspective view of a preferred embodiment of a trailer including trailer loading apparatus in which a transportation frame is mounted to the securement rails on top of the trailer.
Figure 5 is a perspective view of a preferred embodiment of a trailer including trailer loading apparatus with a first transportation frame secured to the securement rails and a second transportation frame secured to the modular hoist.
Figure 6 is a perspective view of a preferred embodiment of a trailer including trailer loading apparatus with two transportation frames secured to the securement rails on top of the trailer.
Figure 7 is a perspective view of a preferred embodiment of a trailer including trailer loading apparatus with two transportation frames secured to the securement rails on top of the trailer and with the retaining means of the hoist removed.
Figure 8 is a perspective view of a preferred embodiment of a trailer including trailer loading apparatus with two transportation frames secured to the securement rails on top of the trailer and with the modular hoist stored in the hoist storage compartment.
Figure 9 is a perspective view of a preferred embodiment of a trailer including trailer loading apparatus with one transportation frame secured centrally to the securement rails on top of the trailer and with the modular hoist stored in the hoist storage compartment.
Figure 10 is a perspective view of another embodiment of a trailer including trailer loading apparatus comprising a manual hoist system with two transportation frames secured to the securement rails on top of the trailer.
Figure 11 is a perspective partially cut away view of another embodiment of a trailer including trailer loading apparatus in which the hoist is located within a compartment provided in the body of the trailer.
Figure 12 is a perspective view of another embodiment of a trailer including trailer loading apparatus in which the hoist is mounted to the trailer.
Figure 13 is a perspective view of another embodiment of a trailer including trailer loading apparatus in which a transportation frame is releasably secured to the hoist.
Figure 14 is a perspective view of another embodiment of a trailer including trailer loading apparatus in which a transportation frame is mounted to the securement rails on top of the trailer.
Figure 15 is a perspective view of another embodiment of a trailer including trailer loading apparatus with a first transportation frame secured to the securement rails and a second transportation frame secured to the modular hoist.
Figure 16 is a perspective view of another embodiment of a trailer including trailer loading apparatus with two transportation frames secured to the securement rails on top of the trailer.
Figure 17 is a perspective view of another embodiment of a trailer including trailer loading apparatus with two transportation frame secured to the securement rails on top of the trailer and with the modular hoist stored in the hoist storage compartment with the storage door open.
Figure 18 is a perspective view of another embodiment of a trailer including trailer loading apparatus with two transportation frame secured to the securement rails on top of the trailer and with the modular hoist stored in the hoist storage compartment with the storage door closed.
Figure 19 is a perspective cut away view of a further embodiment of a trailer including trailer loading apparatus with two transportation frames secured to the securement rails on top of the trailer.

### DESCRIPTION OF THE PREFERRED EMBODIMENTS

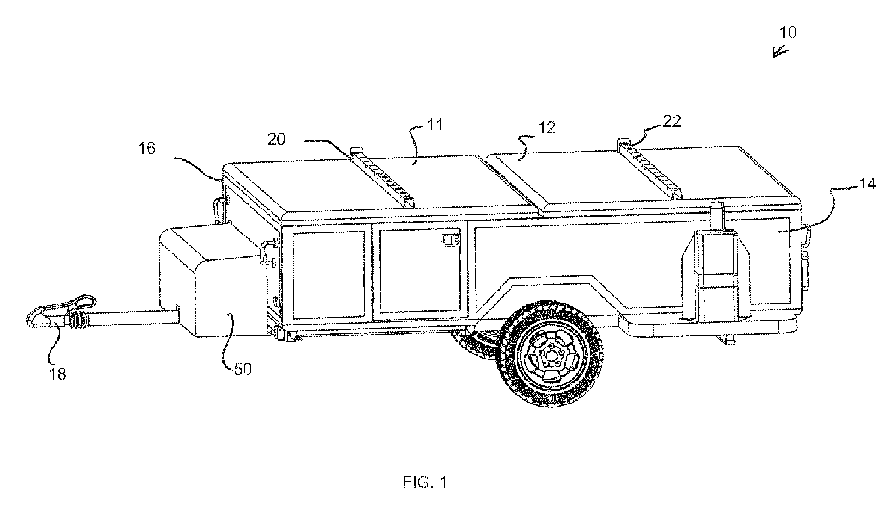

As shown in Figure 1, a trailer 10 generally comprises a rigid shell having a rigid lid(s) 11, 12 or cover(s) and rigid sides 14, 16. In the preferred embodiment, the trailer 10 is a trailer 10 for a folding camper wherein an accommodation space is arranged to be folded out of the trailer 10 at a final destination. The trailer 10 is provided with a trailer coupling 18 in order for the trailer 10 to be secured to and subsequently towed by a motor vehicle.

The trailer 10 is provided with securement rails 20, 22 which are located on the top of the trailer 10 in order for auxiliary equipment to be secured to and transported with the trailer 10.

As shown in Figure 1, the trailer 10 comprises a first securement rail 20 and a second securement rail 22 which both extend across the top of the trailer 10 from a first lateral side 14 to a second lateral side 16. The securement rails 20, 22 are arranged to be parallel and are spaced apart along the longitudinal length of the trailer 10. The securement rails 20, 22 are arranged to support a transportation frame 60 which may have auxiliary equipment secured therein.

The auxiliary equipment that is generally desired to be transported on a trailer includes bicycles, motorbikes, kayaks, jet skis, quad bikes, snow mobiles, wet bikes etc. This generally consists of equipment for outdoor activities and pursuits.

As mentioned above, one problem associated with the prior art is the raising and lowering of the auxiliary equipment and/or a transportation frame on to the top of a trailer. The prior art systems may include a ramp or ramps being secured at the rear of the trailer but these can be manually difficult to use and present a risk of accidents.

The present invention provides a modular hoist 40 which is stored within a hoist storage compartment 50 mounted on the trailer 10. The trailer loading apparatus comprises a modular hoist 40 which can be mounted to and secured to the trailer 10 and which can then be used to raise and lower the auxiliary equipment to or from the upper securement rails 20, 22.

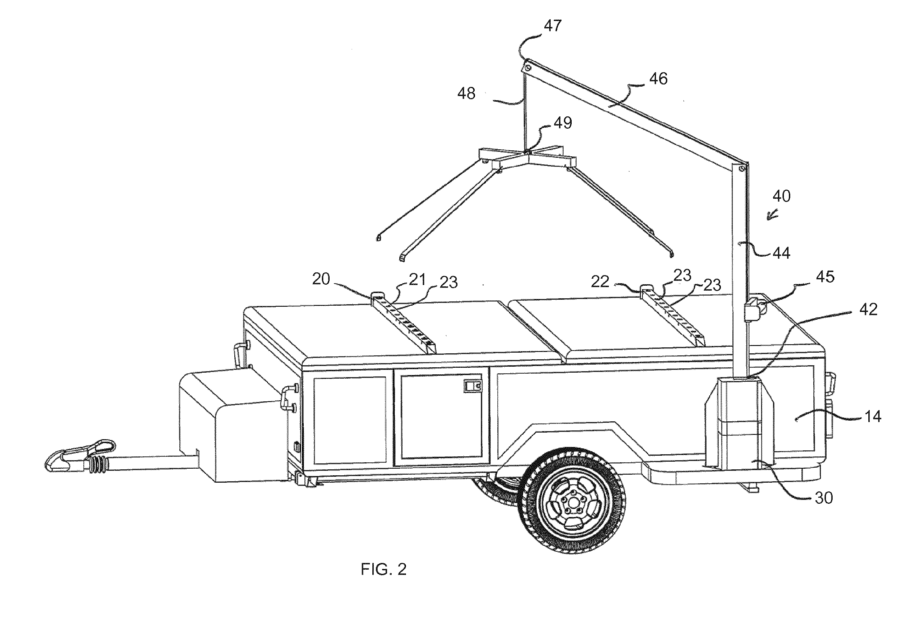

As shown in Figure 2, the modular hoist 40 comprises a base 42 which is arranged to locate in mounting means 30 on a side wall 14 of the trailer 10, a mast member 44, a reach member 46 and a flexible hoist member 48 including attachment means 49. The mounting means 30 for the base portion 42 of the modular hoist 40 is arranged to be permanently mounted to the side 14 of the trailer 10 towards a rear location. Alternatively, fixing means may be provided to releasably mount the mounting means 30 to the trailer 10.

The mast member 44 and the reach member 46 are pivotably moveable relative to each other. However, the reach member 46 is lockable relative to the mast member 44 such that the reach member 46 can be arranged to extend outwardly at a fixed angle from the mast member 44. This pivotal movement also means that the reach member 46 can be moved to a substantially parallel position (or axially aligned position) with the mast member 44 for storage purposes.

In use, a lower end 42 of the mast member 44 is insertable into the mounting means 30 or mounting bracket on the side 14 of the trailer 10. The reach member 46 can then be unlocked from the mast member 44 and pivoted to a suitable hoist position wherein the outer upper end 47 of the reach member 46 is locatable at a suitable position above the securement rails 20, 22.

As mentioned above, the modular hoist 40 includes a flexible hoist member 48 which may comprise a length of webbing (or rope or cord) with a detachable securement means 49 at the end thereof. This attachment means 49 is easily securable to retaining means comprising a frame 66 or upper frame assembly. This upper frame assembly 66 is attachable to a transportation frame 60 in order to secure or release the transportation frame 60 from the trailer loading apparatus.

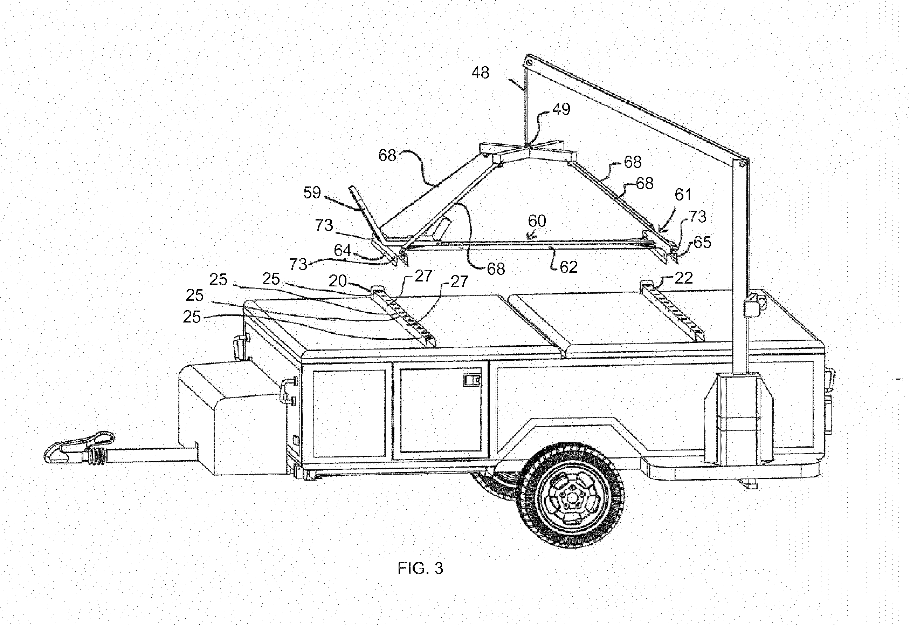

As shown in Figure 3, the transportation frame 60 comprises a lower frame 61 with a lower frame member 62 being arranged to retain a lower part of the auxiliary equipment which is secured therein. In particular, the transportation frame 60 may comprise a bogey into which a wheel or wheels of a motorbike or the like may be located. The lower frame 61 comprises a lower frame member 62 with retaining members 64, 65 located at ends thereof. These retaining members together with the lower frame member form a generally "H" shaped lower frame 61. The lower frame 61 may also comprise a wheel retainer 59 into which a (front) wheel of an item of auxiliary equipment may be retained.

The transportation frame 60 is securable to the upper frame 66 which comprises a spreader. This spreader may comprise two frame members in a cross formation with straps 68 located at each end thereof. These straps 68 may be secured to anchor points provided on the lower frame 61 of the transportation frame 60. Accordingly, the straps 68 secure the upper frame 66 to the lower frame 61.

The hoist is provided with support means or stabilising means (not shown) which may be arranged to extend downwardly from the mounting means in order to further support the base of the hoist. This support means may comprise one or more legs which may be arranged to be extended downwardly from the mounting bracket 30. The or each leg may comprise a ground engaging foot which may be arranged to engage with the ground surrounding the trailer 10. The legs may be telescopically arranged on the mounting means 30 or the legs may be slidably mounted to the mounting means. This enables the legs to be raised for transportation purposes.

In use, the motorbike or other auxiliary equipment is initially secured within the transportation frame 60 on the ground adjacent to the trailer 10. This may comprise locating the wheels of the motorbike in or on the bogey 62 and then securing the upper frame 66 and straps 68 to the lower frame 61. Once secured, the attachment means 49 located on the end of the flexible hoist member 48 can be secured to the upper frame 66. Once secured, the modular hoist 40 can then be operated to raise the auxiliary equipment and the transportation frame 60 to the required height.

The modular hoist 40 may include an electric winch system to raise and lower the transportation frame 60. The trailer loading apparatus may also comprise a control unit in order for a user to easily operate and control the electric winch system. The electric winch system may comprise a spool 45 located on or mounted to the mast member 44. The spool 45 is an electrically driven spool from which a length of webbing can be spooled or unspooled. Accordingly, the proximal end of the webbing is attached to the spool 45 and the distal end of the webbing is provided with the attachment means 49. The length of the webbing extending downwardly from the end 47 of the reach member 46 is adjusted using the electrically driven spool in order to raise or lower the transportation frame 60. During this operation the angle between the mast member 44 and the reach member 46 is fixed.

Once the transportation frame 60 has been raised and at the required height, the transportation frame 60 can then be pivoted relative to the mounting bracket 30 in a horizontal plane in order for the transportation frame 60 to locate above the securement rails 20, 22 on top of the trailer 10. This pivotal movement effectively swings the transportation frame 60 to locate from the side of the trailer 10 to locate over the top of the trailer 10 and above the securement rails 20, 22 (alternatively, the transportation frame can be swung over from the rear of the trailer). The transportation frame 60 can then be engaged with the securement rails 20, 22.

The lower frame 61 of the transportation frame 60 comprises two spaced apart retaining members 64, 65 which are arranged to engage with the respective securement rails 20, 22. In particular, each retaining member 64, 65 may define a channel into which the upper and side surfaces of the securement rails 20, 22 are contained. The retaining members 64, 65 are then slidably engaged with the securement rails 20, 22 and can be moved linearly along the securement rails 20, 22.

The securement rails 20, 22 have a plurality of ball bearings 21, 23 mounted on an upper surface. These ball bearings 21, 23 are spaced apart along the length of the securement rails 20, 22. These ball bearings provide a continuous slidable surface for the retaining members 64, 65. In a further embodiment (not shown) the ball bearings are instead located in the retaining members 64, 65 to achieve the same result. The first arrangement minimises the total number of bearings required when multiple transportation frames are in use, but has bearings exposed to the elements when not in use.

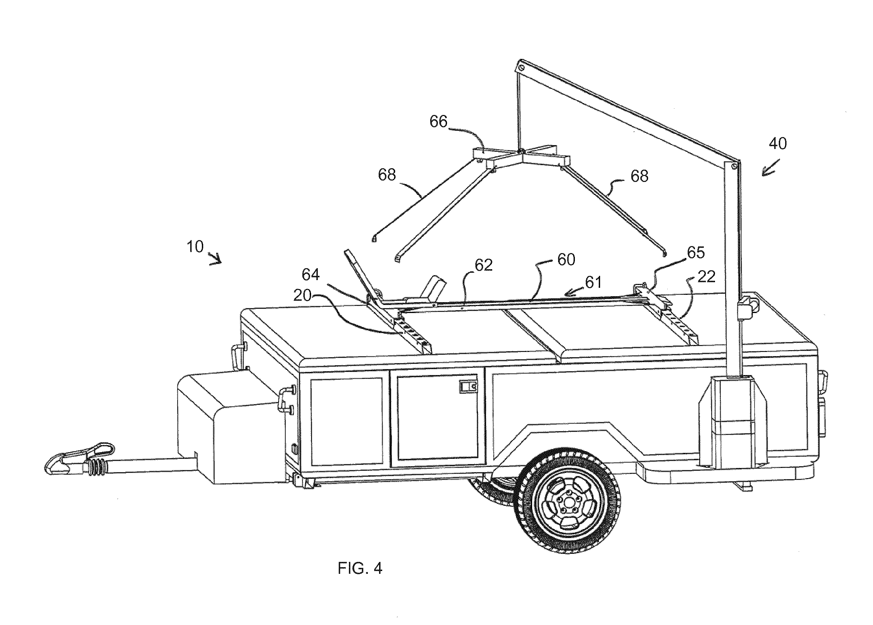

Once engaged, the retaining means 66, 68 of the hoist 40 may be disconnected from the transportation frame 60, as shown in Figure 4.

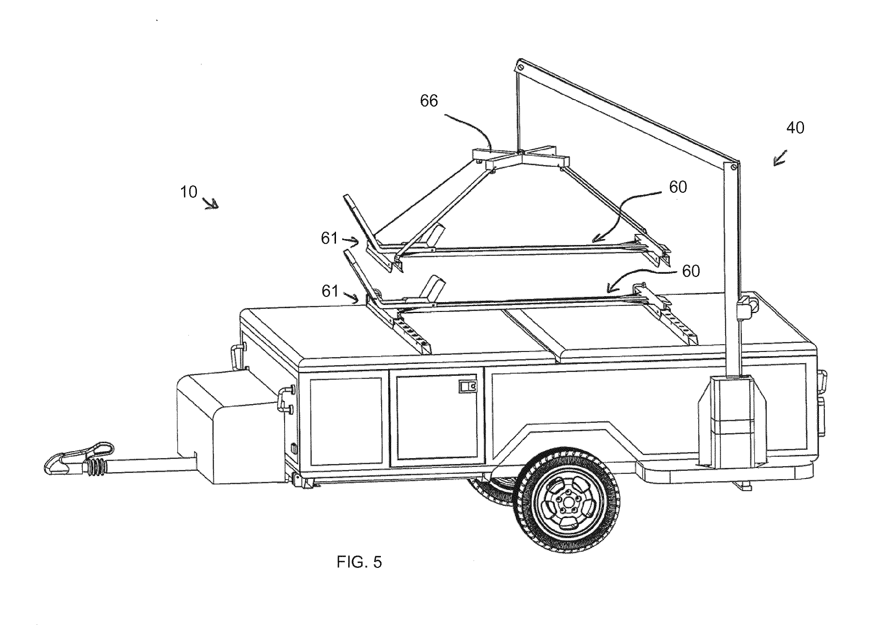

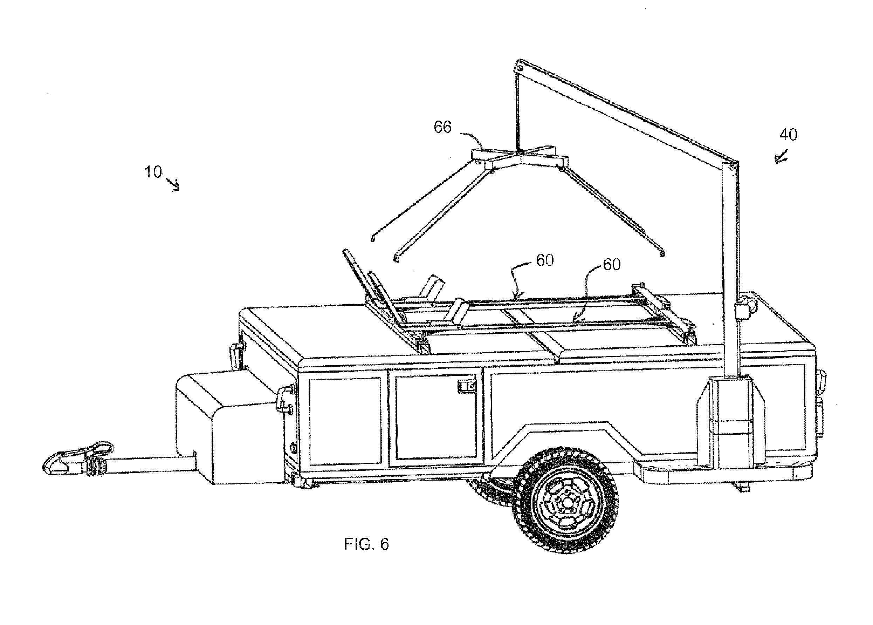

As shown in Figure 5 and Figure 6, once a first transportation frame is safely secured on top of the trailer 10, a second transportation frame 60 can then be attached to the modular hoist 40 in order to load the trailer 10 with further auxiliary equipment. The process and method for loading this further auxiliary equipment is the same as for the first transportation frame 60. However, the first transportation frame 60 will generally have been moved to a position away from the mounting bracket 30 such that the further auxiliary equipment can be easily loaded adjacent to the side of the trailer 10 on which the mounting bracket 30 is located.

As mentioned above, the transportation frame 60 is slidably moveable along the support rails 20, 22 such that auxiliary equipment can be positioned at a predetermined lateral position on the trailer 10. This enables the trailer 10 to be balanced correctly depending upon the auxiliary equipment located on the top of the trailer 10. For example, the trailer 10 may have one or more motorbikes of differing weights located on the top thereof and this may require the transportation frames 60 to be laterally moved to correctly balance the trailer 10.

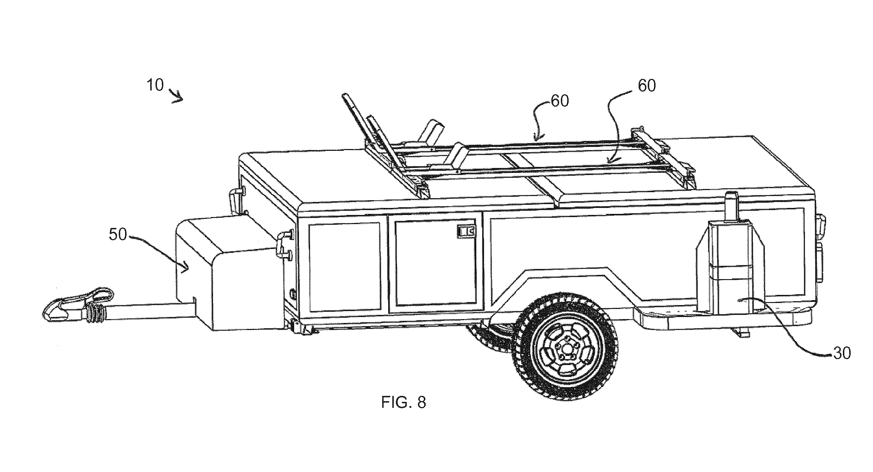

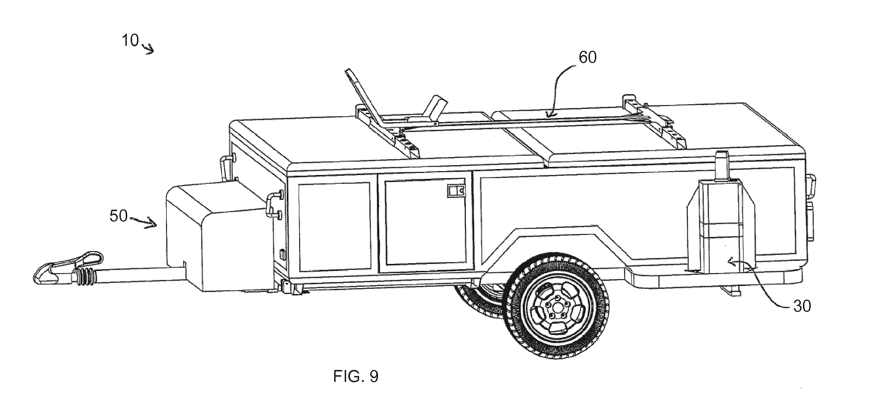

The securement means comprises locking means in order to lock the retaining members 64, 65 to the respective securement rails 20, 22. The locking means comprises quick release pins or wire lock pins (not shown) which are arranged to lock through locking passages or apertures 25, 27 provided along the length of the securement rails and also locking apertures 73 defined in the retaining members 64, 65. In particular, the securement rails 20, 22 have four locking passages 25 to enable two transportation frames 60 to be secured side-by-side in a balanced configuration (as shown in Figure 8). In addition, each securement rail 20, 22 comprises two locking passages 27 to enable a single transportation frame 60 to be secured centrally on the trailer 10 (as shown in Figure 9).

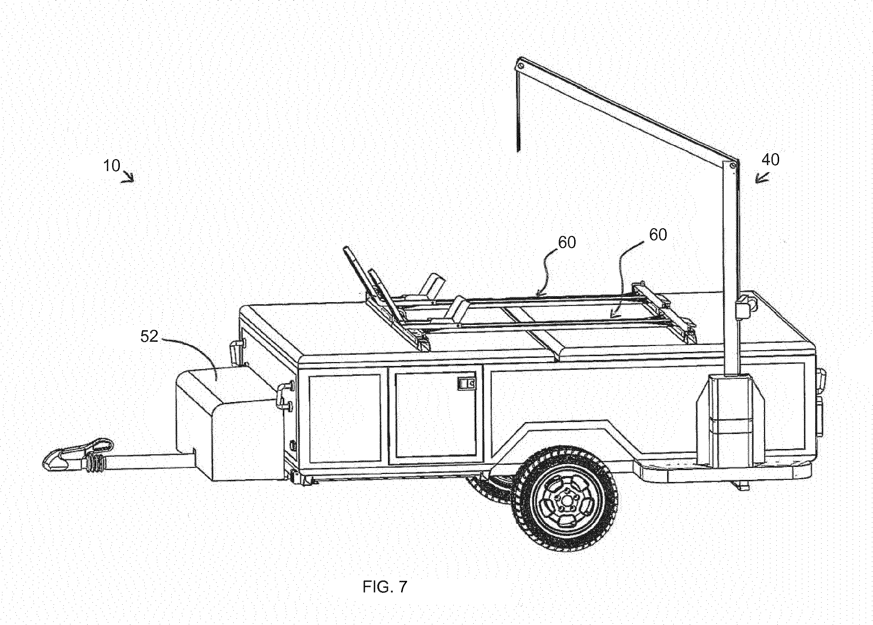

As shown in Figure 7 and Figure 8, once the transportation frames 60 have also been safely secured and positioned on top of the trailer 10, the modular hoist 40 can be removed for storage and transportation. The upper frame 66 and associated straps 68 may first be removed and placed into the hoist storage compartment 50, as shown in Figure 7. The base 42 of the mast member is then withdrawn from the mounting bracket 30. The mast member 44 and the reach member 46 can then be pivoted relative to each other. This pivotal movement enables the mast member 44 and then reach member 46 to locate side-by-side and next to each other. This ensures a compact configuration for storage purposes. Alternatively, the reach member can be pivoted to a storage position whilst the mast member is still located in the mounting means 30.

The trailer 10 includes a hoist storage compartment 50 having a separate storage compartment door 52. This hoist storage compartment 50 is provided by a hoist storage locker which is mounted on the A frame of the trailer 10. The hoist storage compartment 50 is fully accessible whilst the transportation frames 60 are secured on top of the trailer 10.

The storage compartment 50 is separate from the main stowing compartment of the trailer 10. In particular, the main stowing compartment is not accessible whilst the transportation frames are secured in the securement rails 20, 22.

The process for removing or dismounting and lowering the auxiliary equipment from the top of the trailer 10 is a reversal of the method of loading the equipment on to the trailer 10.

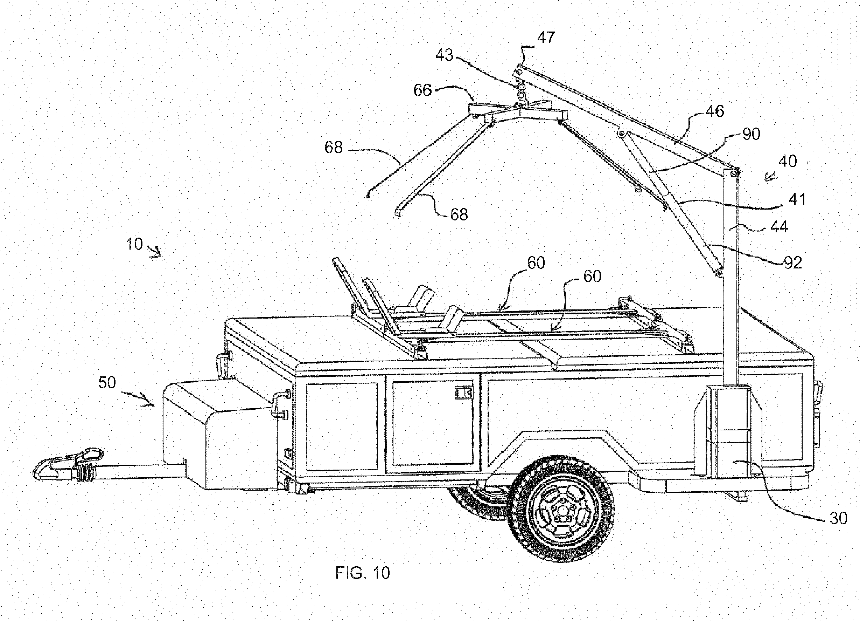

As shown in Figure 10, the hoist may comprise a manual hoist system in order to raise and lower the transportation frame 60 to or from the top of the trailer 10. In this system, a hydraulic (or fluid or pneumatic) drive means 41 is operated in order to manoeuvre the transportation frame 60. In particular, the system uses a hydraulic jack or hydraulic ram which is operated by a detachable lever (not shown) in order to pivot the reach member 46 relative to the mast member 44. The flexible hoist member 48 comprises a fixed length of chain 43 which hangs down from the distal end 47 of the reach member 46. In use, the retaining means (spreader frame 66 and straps 68) is secured to the transportation frame 60 located adjacent to a side of the trailer 10. The detachable lever is moved, or pivoted, up and down in order to move a piston 90 outwardly from a respective cylinder 92. The cylinder 92 is pivotally connected at a proximal end to the mast member 44 whereas a distal end of the piston 90 is pivotally connected along the length of the reach member 46. Accordingly, as the hydraulic jack or ram 41 is operated the combined length of the piston 90 and cylinder 92 increases in order to pivot the reach member 46 upwardly relative to the statically mounted mast member 44. This thereby raises the transportation frame 60 upwardly. Again once at the required height, the transportation frame 60 can be swung over the securement rails 20, 22 and then lowered in to position. The transportation frame 60 is then disconnected from the hoist 40 and the hoist 40 can be stored away.

In a further embodiment of the invention (not shown) the mount for the hoist is concealed within a drawer that can slide in to and out of the trailer. This affords protection of the mount when not in use. The hoist may also be stowed within the drawer, freeing up the storage container on the A frame for other use.

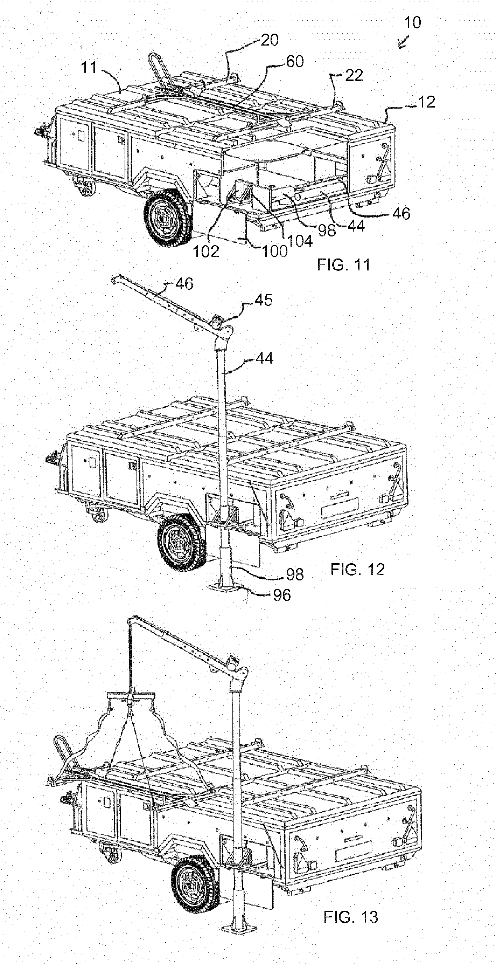

Another embodiment of a trailer 10 including trailer loading apparatus is shown in Figure 11 to Figure 18. In this embodiment, the hoist storage compartment 50 is provided in the body of the trailer 10. In particular, the hoist storage compartment 50 is located in a rear section of the trailer 10.

The hoist storage compartment 50 includes a door 100 to provide access to the inner storage space where the modular hoist is located during transit. In this embodiment, the mounting means 30 is arranged to slide into and out of the hoist storage compartment 50. The mounting means 30 comprises a mounting sleeve 102 supported within a frame 104. This mounting frame 104 is slidably mounted to extend outwardly from the hoist storage compartment 50. The mounting frame 104 may be mounted on a sliding rail(s) to enable the mounting frame 104 to slide into and out from the hoist storage compartment 50.

In other embodiments, a different movement mechanism may be used to move the mounting frame into and out of the hoist storage compartment 50. For example, the mounting bracket attachment 104 could be slideable or hinged or on a scissor mechanism etc. to move the mounting means into and out of the compartment 50. In a further embodiment, the mounting bracket attachment may be separate or and is manually attached in place.

The modular hoist comprises a reach member 46 and a mast member 44. The reach member 46 comprises a telescopic reach member 46 which can be longitudinally extended. The telescopic reach member 46 may have a first portion or section which can extend from and be retracted into a second (sleeve) portion or section. Similarly the mast member 44 comprises a telescopic mast member 44 which can be longitudinally extended. The telescopic mast member 44 may have a first portion or section which can extend from and be retracted into a second (sleeve) portion or section.

During transit, the modular hoist is stored with the mast member 44 and the reach member 46 lying adjacent to each other on a floor of the hoist storage compartment 50. The modular hoist also comprises a stabilising base comprising a leg 98 and foot 96. This base is also stored within the hoist storage compartment 50.

For assembly, the storage door 100 is pivoted open about a lower edge and the base 96, 98, reach 46, mast 44 and upper frame 66 including straps 68 are removed from the hoist storage compartment 50. The base 96, 98 is placed on the ground and the mounting bracket 102, 104 is slidably moved out of the hoist storage compartment 50. The mast member 44 is then inserted through the mounting sleeve 102 and the lower end of the mast member 44 is secured within the leg 98 and foot 96.

The reach member 46 may be already attached to the top of the mast member 44 and, if separate, the reach member 46 is attached to the mast member 44 in order to extend outwardly therefrom, as shown in Figure 12.

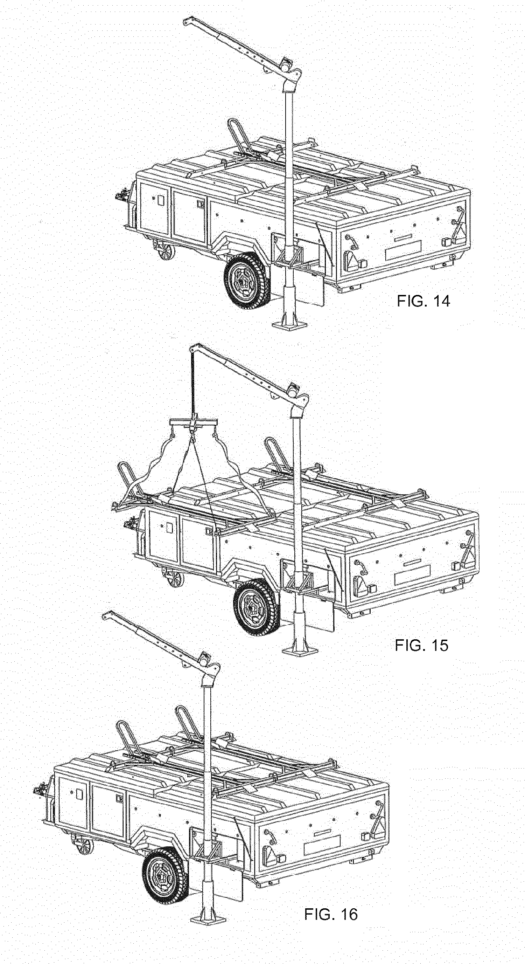

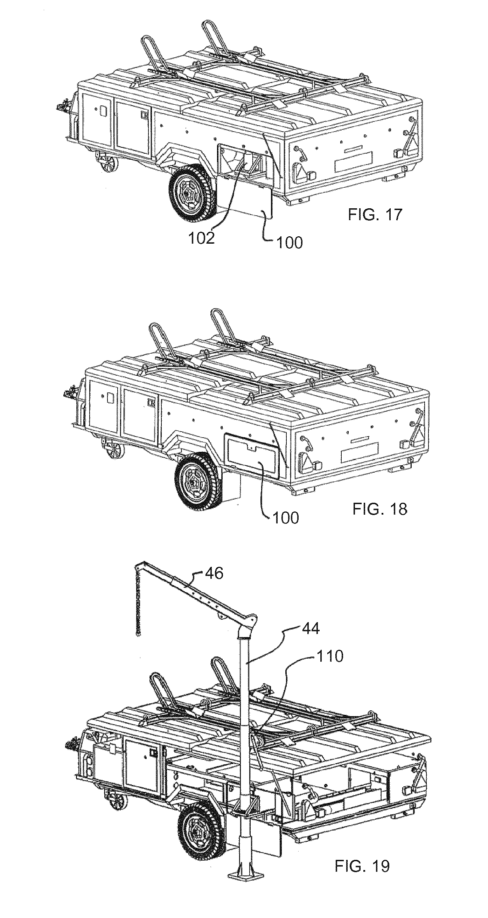

A transportation frame 60 can then be attached to the hoist as shown in Figure 13 and can be lifted onto and subsequently secured in place on the trailer 10 as shown in Figure 14. A second transportation frame 60 can then be attached (as shown in Figure 15) and secured on top of the trailer (as shown in Figure 16). The modular hoist can then be disassembled and stored back in the hoist storage compartment 50, as shown in Figure 17 and Figure 18. Accordingly, in this invention, the mounting means 30 is stored away inside the trailer during transit but is quick and simple to deploy.

In a yet further embodiment shown in Figure 19, the modular hoist may comprise a manual winch 110 rather than a powered winch 45.

## Claims

1. A trailer comprising trailer loading apparatus and a hoist storage compartment, the trailer loading apparatus comprising a hoist and load securement means for securing auxiliary equipment on the trailer, the hoist comprising:
mounting means to mount a part of the hoist to the trailer; and
retaining means for releasably retaining a load to the hoist;
and wherein the hoist is configurable between:
a first configuration in which the hoist is able to raise auxiliary equipment onto the load securement means provided on the top of the trailer; and
a second configuration in which the hoist is stored within the hoist storage compartment.

2. A trailer according to Claim 1 in which the hoist comprises a modular hoist.

3. A trailer according to any preceding claim in which the trailer loading apparatus comprises a plurality of transportation frames and in which each transportation frame is arranged to retain an item of auxiliary equipment thereon for transportation purposes.

4. A trailer according to Claim 3 in which the retaining means of the hoist comprises an upper frame assembly which is secureable to a transportation frame and in which the upper frame assembly is arranged to be secured to the lower frame assembly by one or more straps and in which the retaining means comprise a spreader frame together with associated straps in order to secure an item of auxiliary equipment to a transportation frame during loading and unloading.

5. A trailer according to any preceding claim in which the load securement means comprises two securement rails and in which the securement rails are arranged to be parallel and spaced apart on the top of the trailer and in which the securement rails extend laterally across the top of the trailer and extend substantially from a first lateral side of the trailer to a second lateral side of the trailer.

6. A trailer according to Claim 5 in which each securement rail comprises locking means in order for a transportation frame to be secured at a number of pre-selected locations along a length of the securement rail and in which the transportation frame is arranged to be movably secured to each securement rail and in which the transportation frame is arranged to be slidably secured to each securement rail and the transportation frame is slidably moved along a length of each securement rail and locked in a transportation position.

7. A trailer according to Claim 6 in which the transportation frame comprises a first mounting member to register with a first securement rail and a second mounting member to register with a second securement rail and in which the transportation frame is moveable along the lateral extent of the trailer on the securement rails and the transportation frame is lockable in one of a number of predefined positions along the securement rails.

8. A trailer according to any preceding claim in which the hoist includes a mast member and a reach member and, in which, the reach member is selectively pivotable relative to the mast member and in which the reach member is lockable to the mast member at an angle in order to provide a hoist arrangement in which the mast member is unlockable from the reach member in order for the mast member and the reach member to be stored in a substantially parallel or side-by-side configuration.

9. A trailer according to any preceding claim in which the mounting means is located on a lateral side of the trailer and in which the mounting means provides a mounting sleeve into which a part of the hoist can be inserted in order for the hoist to be mounted to the trailer and in which a mast member of the hoist comprises an end portion which is insertable into the mounting sleeve in order for the hoist to be mounted to the trailer.

10. A trailer according to any preceding claim in which the mounting means is permanently provided on an exposed outer surface of the trailer.

11. A trailer according to any preceding claim in which the mounting means is configurable to be concealed during transportation and the mounting means is provided as a cabinet drawer which is movable into and out of a part of a body of the trailer.

12. A trailer according to any preceding claim in which the trailer comprises a primary item of equipment which comprises a folding camper or a trailer tent and in which the primary item of equipment is arranged, during transportation, to be stored in a main stowing compartment of the trailer and in which the hoist storage compartment comprises a container which is located at a front end of the trailer and in which the hoist storage container comprises a locker which is mounted on an A-frame of the trailer.

13. A trailer according to any preceding claim in which the hoist storage compartment comprises a hoist storage compartment door and wherein the hoist storage compartment is accessible whilst a transportation frame is secured on the trailer.

14. Trailer loading apparatus, the trailer loading apparatus comprising a hoist, the hoist comprising:
mounting means to mount a part of the hoist to a trailer; and
retaining means for releasably retaining a load to the hoist;
and wherein the hoist is configurable between:
a first configuration in which the hoist is able to raise auxiliary equipment onto load securement means provided on a top of the trailer; and
a second configuration in which the hoist is stored within a hoist storage compartment.

15. A method of loading auxiliary equipment on to a trailer, the trailer comprising load securement means for securing auxiliary equipment on the trailer and a hoist storage compartment, the trailer loading apparatus comprising a hoist, the method comprising:
mounting a part of the hoist to the trailer; and
releasably retaining a load to the hoist;
and reconfiguring the hoist between:
a first configuration in which the hoist is able to raise auxiliary equipment onto the load securement means provided on the top of the trailer; and
a second configuration in which the hoist is stored within the hoist storage compartment.
